(19)

Europäisches
Patentamt
European
Patent Office
Office européen
des brevets

(11) **EP 1 850 103 A1**

(12) **EUROPEAN PATENT APPLICATION**

(43) Date of publication:
**31.10.2007 Bulletin 2007/44**

(51) Int Cl.:
*G01K 7/01* (2006.01)   *G01K 3/00* (2006.01)

(21) Application number: **06300406.3**

(22) Date of filing: **26.04.2006**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(71) Applicant: **Thomson Licensing
92100 Boulogne (FR)**

(72) Inventor: **Zhang, Zhen Peng
518038, Shenzhen (CN)**

(74) Representative: **Rossmanith, Manfred
Deutsche Thomson-Brandt GmbH
European Patent Operations
Karl-Wiechert-Allee 74
30625 Hannover (DE)**

(54) **Automatic control device for core and ambient temperature detection and the method thereof**

(57)   An automatic control device for core and ambient temperature detection of integrated circuits and the method thereof are disclosed. By employing a transistor inside a chip as a thermal sensor, the core and ambient temperatures are detected with several simple electronic components and the detection result will be fed back to the chip. Necessary measures will be taken to cool down the system.

Fig.5

EP 1 850 103 A1

**Description**

FIELD OF THE INVENTION

The present invention relates generally to temperature detection of IC, and more particularly to automatic control for core and ambient temperature detection of IC.

BACKGROUND OF THE INVENTION

Most electronic products such as DVD receiver, amplifier, TV, Radio, DVD and MP3 Player in current market use chips like MCU or DSP as the system controller or processor. Both the temperature of these chips and the ambient of the system will affect the safety of the entire system, especially products with plastic outer shells. To avoid the high temperature effects, an overheating detection device is needed to set a temperature limit for the system. When the temperature exceeds a predetermined limit, the controller/processor will be alerted by the device and the system will be switched to standby mode or the system clock will be slowed down, etc.

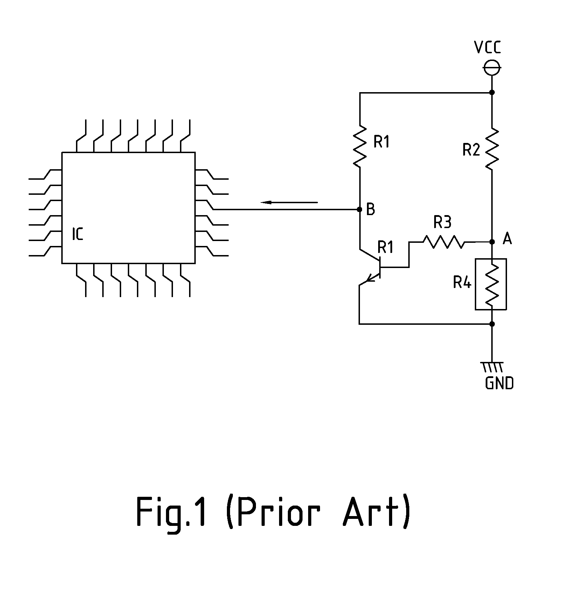

A conventional way to implement the above said temperature detection is illustrated in Fig. 1. In this overheating detection device a special thermal resistor R4 is used as a thermal sensor to detect the ambient temperature. R2 is a bias resistor and a bipolar transistor Q1 is used for signal detection.

Due to the thermal characteristics of R4, the voltage at node A which directly affects the base-emitter voltage of Q1 will change accordingly to the temperature. To achieve a certain temperature level of protection, the value of R2 is selected so that when the temperature reaches the preset level the voltage at node A will correspond to the general base-emitter threshold voltage Vbe of a bipolar transistor, e.g. 0.75V. When the temperature detected is lower than the preset level, the base-emitter voltage of Q1 will be lower than threshold voltage Vbe. Q1 will stay in the cut off region and the voltage level at node B will be high. When the temperature detected is higher than the preset level, the base-emitter voltage of Q1 will be higher than the threshold voltage Vbe. Q1 will work in the saturation region and the voltage level at node B will decrease to low. Therefore based on above characteristics, the voltage level at node B can be used to reflect the system temperature level and the system will be switched to stand-by mode or be powered off when the temperature is too high.

However, such an overheating detection device requires a special thermal sensor which is costly for consumer electronic products. Furthermore such an overheating detection device can not detect the real temperature of the IC core rapidly and the fabrication technique of the detection circuit will be incompatible with that of the chip.

SUMMARY OF THE INVENTION

In one aspect of the present invention, an automatic control device for core and ambient temperature detection of integrated circuits is proposed. The control device including: a first transistor inside a chip working as a thermal sensor; a second transistor, outside the chip, of which the working mode is controlled by the output of said thermal sensor and the output of the second transistor is fed back to the chip to control the temperature.

According to the present invention, the first transistor is an NMOS transistor Qn and the second transistor is an NPN bipolar transistor Q.

According to the present invention, a first electrode of said thermal sensor is connected out of the chip with the voltage supply Vcc via a first resistor R1, a second electrode of said thermal sensor is connected with the ground plane GND and a third electrode of the thermal sensor is controlled by inside signals of the chip; said first electrode of the thermal sensor is also connected with one electrode of the NPN bipolar transistor Q of which a second electrode is connected with the ground plane GND and a third electrode is connected with the voltage supply Vcc via a second resistor R2; the output from the third electrode of said NPN bipolar transistor Q is fed back to the chip.

According to the present invention, said NMOS transistor Qn is part of an inverter In inside the chip.

According to the present invention, there is a third resistor R3 between said thermal sensor and the first resistor R1, and said thermal sensor is connected with the first electrode of said NPN bipolar transistor Q via the third resistor R3 and a fourth resistor R4.

According to the present invention, the first transistor is a PMOS transistor Qp and the second transistor is a PNP bipolar transistor Q'.

According to the present invention, a first electrode of said thermal sensor is connected out of the chip with the ground plane GND via a first resistor R1, a second electrode of said thermal sensor is connected with the voltage supply Vcc and a third electrode of the thermal sensor is controlled by the inside signal of the chip; said first electrode of the thermal sensor is also connected with one electrode of the PNP bipolar transistor Q' of which a second electrode is connected with the voltage supply Vcc and a third electrode is connected with the ground plane GND via a second resistor R2; the output from the third electrode of said PNP bipolar transistor Q' is fed back to the chip.

According to the present invention, said PMOS transistor Qp is part of an inverter In inside the chip.

According to the present invention, there is a third resistor R3 between said thermal sensor and the first resistor R1, and said thermal sensor is connected with the first electrode of said PNP bipolar transistor Q' via the third resistor R3 and a fourth resistor R4.

In another aspect of the present invention, a method for automatic control of core and ambient temperature detection of integrated circuits is proposed, the method including the steps of: a) using a first transistor inside a chip as a thermal sensor; b) controlling the working mode of a second transistor with the output of the thermal sensor; c) feeding back the output of the second transistor to said chip to limit the core and ambient temperature.

BRIEF DESCRIPTION OF THE DRAWINGS

Fig. 1 is a schematic diagram showing the conventional way to implement temperature detection of IC;

Fig. 2 shows the inner structure of a chip;

Fig. 3 (a) shows the inner structure at output end of a chip;

Fig. 3 (b) shows logic symbols of Fig.3 (b);

Fig. 4 shows the relationship of the on-state channel resistance of an NMOS transistor of MCU NEC78F0124H versus the temperature;

Fig. 5 is a schematic diagram of an embodiment of the present invention;

Fig.6 is a fractional diagram of Fig.5; and

Fig.7 is a schematic diagram of another embodiment of the present invention.

DETAILED DESCRIPTION OF THE PREFERRED EMBODIMENTS

The technical features of the present invention will be described further with reference to the embodiments. The embodiments are only preferable examples without limiting to the present invention. It will be well understood by the following detail description in conjunction with the accompanying drawings.

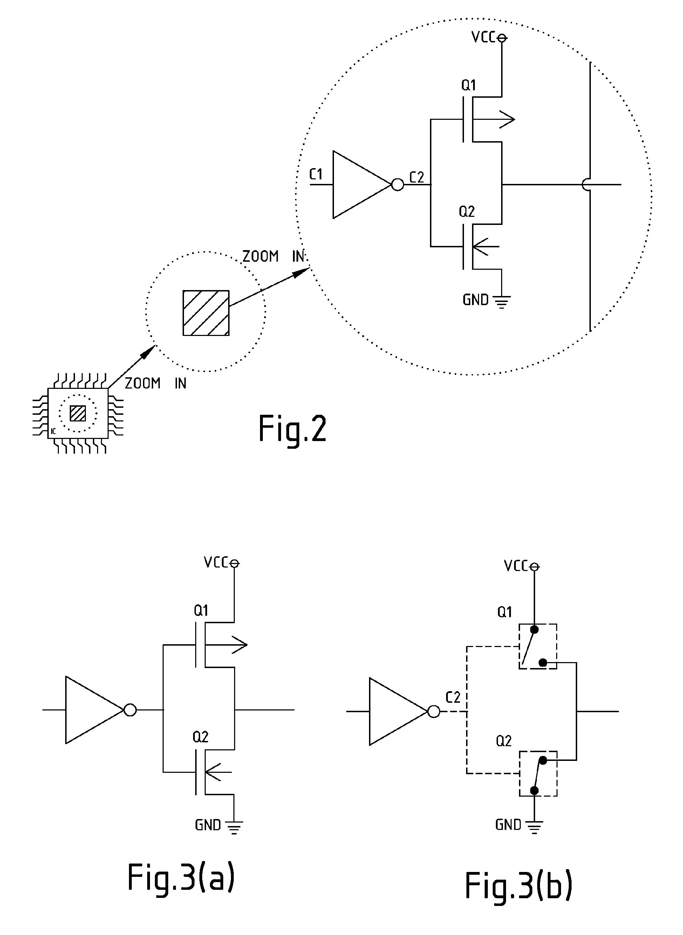

The inner structure of a chip like MCU/DSP is illustrated in Fig. 2. The shadowed part is a silicon die which is the core of the chip and contains thousands of electronics components. Due to the comparatively small area of the core, if one of the electronics components inside can be used as the thermal sensor in the control device of temperature detection, then the detected temperature can be treated as that of the core on great extent since all components are located in such a pin-sized area.

It is known that the input and output ports are linked with inside components of the chip by thin and soft metal lines. In this case, the core is able to communicate with outer ports through the lines. Fig.3 (a) is a magnified schematic diagram showing inner structure at output end of a chip. At least one output PIN of a chip like MCU/DSP will be connected with an inverter inside the chip which is formed by connecting a PMOS transistor Q1 in series with an NMOS transistor Q2. Fig. 3 (b) shows the working scheme of Q1 and Q2 as alternative switches. When the voltage at node C2 is high, Q2 is turned on while Q1 is turned off, so the output will be low. When the voltage at node C2 is low, Q2 is turned off and Q1 is turned on, so the output will be high.

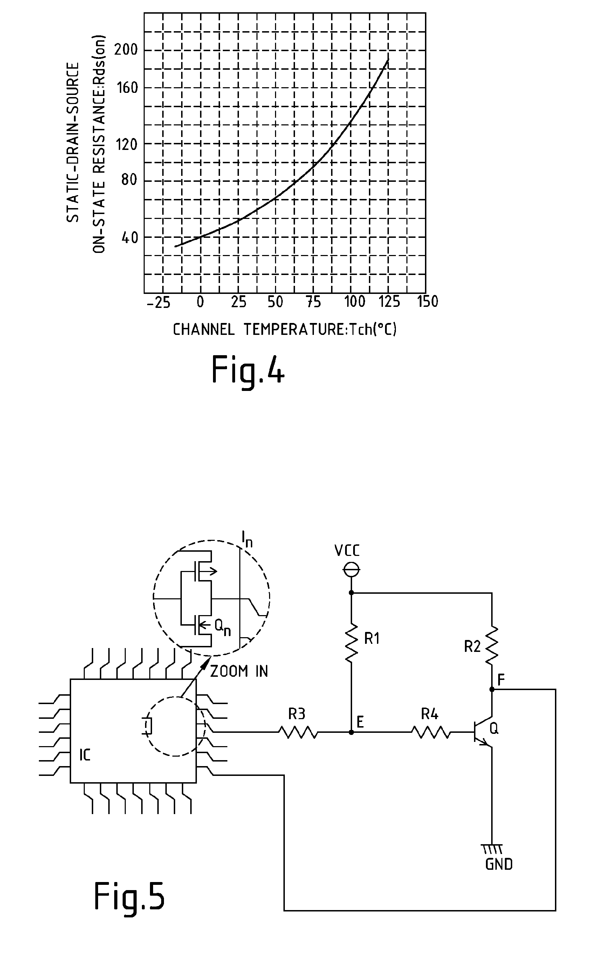

Fig. 4 shows the relationship between the static drain-source on-state resistance of an NMOS transistor and the channel temperature thereof, wherein the NMOS transistor is part of an inverter inside MCU NEC78F0124H. The resistance is 50 Ohm at the temperature of 24°C and as the temperature rises up, the resistance increases accordingly, which demonstrates the quality of NMOS transistors to work as thermal sensors.

Based on above, one embodiment of the present invention can be implemented, as shown in Fig.5, wherein an NMOS transistor Qn of an inverter In inside a chip is used as the thermal sensor. R1 and R3 are bias resistors, by which the protection temperature level can be preset. R4, R1, R2 can be treated as output switches for detection and an NPN bipolar transistor Q is used for signal detection.

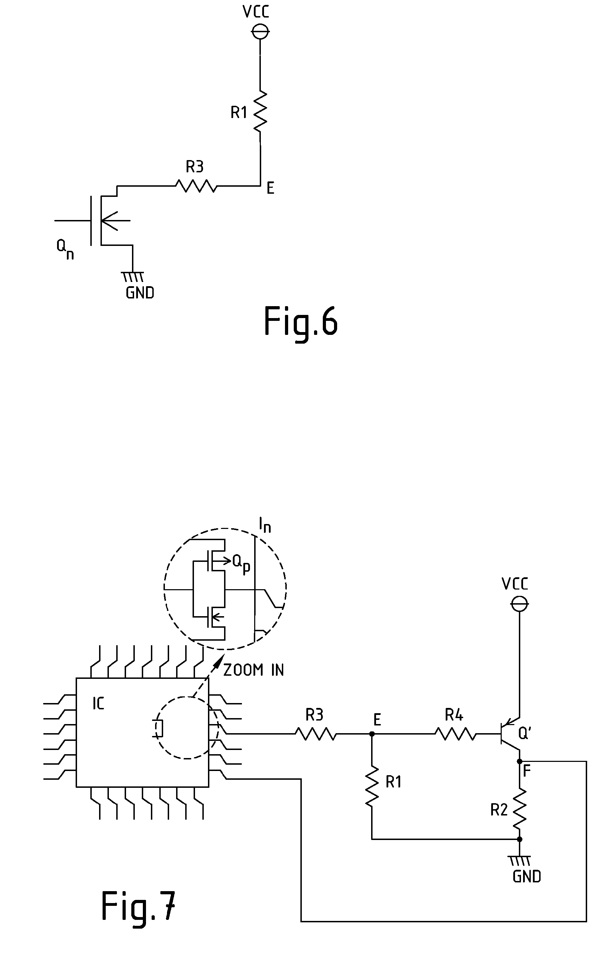

To initiate the process of temperature detection, the NMOS transistor Qn which works as the thermal sensor in the temperature control device will be turned on by applying high voltage to its gate. Inside logic of the chip will be responsible to control the initiation of the detection. When the detection begins, the NMOS transistor Qn is turned on so that a voltage divider is formed up by connecting the NMOS transistor Qn, R1 and R3 in series, as shown Fig. 6. Hence the voltage at node E can be calculated according to following equation (1), in which the effects of R2, R4 and Q can be ignored since they have very high impedance in standby mode.

$$Ve= Vcc * [R3+Rds] / [R3+R1+Rds] \qquad (1)$$

Since the resistance of R4 can be ignored compared to the base-emitter resistance of Q, the voltage at node E can be treated as the base-emitter voltage of Q. Thus with knowledge of the expected protection temperature level and the threshold voltage of Q, values of R1 and R3 can be selected. Preferably, R1 can be 4700 ohm, R3 can be 1000 ohm, R2 can be 10000 ohm and R4 can be 1000 ohm.

When the temperature of the core rises, the channel resistance of the NMOS transistor Qn will increase, the voltage at Node E will increase too. The output at node F is high until the temperature rises up to the limit. When the temperature exceeds the limit so that the threshold voltage of Q is achieved, it will be turned on and then the output voltage at node F will be dragged low. The output signal variation at node F will alert the chip to that the temperature has exceeded the limit and the chip will take relative measures to reduce the heat by switching the system to standby mode or slowing down the running frequency, etc.

In another embodiment of the present invention, a PMOS transistor Qp is taken as the thermal sensor in the temperature detection process. Due to similar thermal characteristics to NMOS transistors', the drain-source on-state resistance of a PMOS transistor will also increase as the temperature goes up.

As shown in Fig.7, a PMOS transistor Qp of an inverter In inside the chip is connected out to the bias resistors R1 and R3. R4, R1, R2 can be treated as output switches for the detection and a PNP bipolar transistor Q' is used for signal detection.

Since the resistance of R4 can be ignored compared to the base-emitter resistance of Q', the voltage difference between the voltage at node E and the voltage supply Vcc can be treated as the base-emitter voltage of Q'. Thus with knowledge of the expected protection temperature level and the threshold voltage of Q', values of R1 and R3 can be selected. Preferably, R1 can be 4700 ohm, R3 can be 1000 ohm, R2 can be 10000 ohm and R4 can be 1000 ohm.

When detecting temperature, the gate of the PMOS transistor Qp is biased to low to initiate temperature detection. Inside logic of the chip will control the initiation of the detection. The output at node F is low until the temperature limit is exceeded. As the temperature rises, the voltage level at node E drops. When it drops down to the point that the difference between the voltage level at node E and the voltage supply Vcc reaches the threshold voltage of Q', it will be turned on and then the output voltage at node F will be raised to high. Once receiving the signal variation at node F, the chip will take on preset measures to low down the temperature.

According to the present invention, it is an individual MOS transistor that acts as the thermal sensor. Thus, implementations of the present invention will not be limited to structures that have inverters at the output end of a chip. Other implementations which take a MOS transistor as the thermal sensor, no matter inside or outside the chip, should also be called transformations of the present invention since the working scheme will be the same as that of the present invention. Also, other types of transistor outside the chip can be used for signal detection as well. However, bipolar transistor may provide a less costly and simpler structure.

In the present invention, IC temperature detection is implemented with several ordinary electronic components and this cost-effective design of the present invention without deliberate introduction of an expensive thermal sensor is ideal for consumer electronic products.

Furthermore, no extra space and additional installation steps are needed for the thermal sensor and this design is compatible to the manufacturing techniques of the chip.

Under the tendency of low power consumption, the present invention will still be suitable for the ambient temperature detection for electronic products which have plastic outer shells that may be sensitive to heat caused by amplifiers or heat components.

Whilst there has been described in the forgoing description preferred embodiments and aspects of the present invention, it will be understood by those skilled in the art that many variations in details of design or construction may be made without departing from the present invention. The present invention extends to all features disclosed both individually, and in all possible permutations and combinations.

**Claims**

1.    An automatic control device for core and ambient temperature detection of integrated circuits, including:

a first transistor inside a chip working as a thermal sensor;

a second transistor, outside the chip, of which the working mode is controlled by the output of said thermal sensor and the output of the second transistor is fed back to the chip to control the temperature.

2. The control device according to claim 1, wherein the first transistor is an NMOS transistor (Qn) and the second transistor is an NPN bipolar transistor (Q).

3. The control device according to claim 2, wherein a first electrode of said thermal sensor is connected out of the chip with the voltage supply via a first resistor (R1), a second electrode of said thermal sensor is connected with the ground plane and a third electrode of the thermal sensor is controlled by inside signals of the chip;

said first electrode of the thermal sensor is also connected with one electrode of the NPN bipolar transistor (Q) of which a second electrode is connected with the ground plane and a third electrode is connected with the voltage supply via a second resistor (R2);

the output from the third electrode of said NPN bipolar transistor (Q) is fed back to the chip.

4. The control device according to claim 2 or 3, wherein said NMOS transistor (Qn) is part of an inverter (In) inside the chip.

5. The control device according to claim 2 or 3, wherein there is a third resistor (R3) between said thermal sensor and the first resistor (R1), and said thermal sensor is connected with the first electrode of said NPN bipolar transistor (Q) via the third resistor (R3) and a fourth resistor (R4).

6. The control device according to claim 1, wherein the first transistor is a PMOS transistor (Qp) and the second transistor is a PNP bipolar transistor (Q').

7. The control device according to claim 6, wherein a first electrode of said thermal sensor is connected out of the chip with the ground plane via a first resistor (R1), a second electrode of said thermal sensor is connected with the voltage supply and a third electrode of the thermal sensor is controlled by the inside signal of the chip;

said first electrode of the thermal sensor is also connected with one electrode of the PNP bipolar transistor (Q') of which a second electrode is connected with the voltage supply and a third electrode is connected with the ground plane via a second resistor (R2);

the output from the third electrode of said PNP bipolar transistor (Q') is fed back to the chip.

8. The control device according to claim 6 or 7, wherein said PMOS transistor (Qp) is part of an inverter (In) inside the chip.

9. The control device according to claim 6 or 7, wherein there is a third resistor (R3) between said thermal sensor and the first resistor (R1), and said thermal sensor is connected with the first electrode of said PNP bipolar transistor (Q') via the third resistor (R3) and a fourth resistor (R4).

10. A method for automatic control of core and ambient temperature detection of integrated circuits, the method including the steps of:

a) using a first transistor inside a chip as a thermal sensor;

b) controlling the working mode of a second transistor with the output of the thermal sensor;

c) feeding back the output of the second transistor to said chip to limit the core and ambient temperature.

Fig.1 (Prior Art)

EP 1 850 103 A1

Fig.2

Fig.3(a)

Fig.3(b)

7

Fig.4

Fig.5

Fig.6

Fig.7

**European Patent Office**

**EUROPEAN SEARCH REPORT**

Application Number

EP 06 30 0406

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 422 832 A (MOYAL MIKI [US]) 6 June 1995 (1995-06-06) * column 1, line 63 - column 4, line 32 * * column 10, line 59 - column 11, line 66 * ----- | 1-10 | INV. G01K7/01 G01K3/00 |
| A | US 6 363 490 B1 (SENYK BORYS S [US]) 26 March 2002 (2002-03-26) * column 2, line 65 - column 5, line 38 * ----- | 1-10 | |
| A | US 5 821 599 A (RUPP ROLAND [DE]) 13 October 1998 (1998-10-13) * column 2, line 40 - column 3, line 15 * ----- | 1,2,6 | |

TECHNICAL FIELDS SEARCHED (IPC)

G01K
H01L
G06F

The present search report has been drawn up for all claims

| Place of search | Date of completion of the search | Examiner |
|---|---|---|
| The Hague | 25 October 2006 | de Bakker, Michiel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 30 0406

This annex lists the patent family members relating to the patent documents cited in the above-mentioned European search report.
The members are as contained in the European Patent Office EDP file on
The European Patent Office is in no way liable for these particulars which are merely given for the purpose of information.

25-10-2006

| Patent document cited in search report | | Publication date | Patent family member(s) | | Publication date |
|---|---|---|---|---|---|
| US 5422832 | A | 06-06-1995 | EP | 0660093 A1 | 28-06-1995 |
| | | | JP | 7209091 A | 11-08-1995 |
| US 6363490 | B1 | 26-03-2002 | AU | 3740200 A | 16-10-2000 |
| | | | BR | 0009377 A | 26-12-2001 |
| | | | CN | 1345425 A | 17-04-2002 |
| | | | EP | 1166198 A1 | 02-01-2002 |
| | | | TW | 505844 B | 11-10-2002 |
| | | | WO | 0058813 A1 | 05-10-2000 |
| US 5821599 | A | 13-10-1998 | DE | 4322650 A1 | 12-01-1995 |
| | | | WO | 9502172 A1 | 19-01-1995 |
| | | | DE | 59406093 D1 | 02-07-1998 |
| | | | EP | 0707708 A1 | 24-04-1996 |
| | | | JP | 2630854 B2 | 16-07-1997 |
| | | | JP | 8506665 T | 16-07-1996 |

For more details about this annex : see Official Journal of the European Patent Office, No. 12/82